# EUROPEAN PATENT SPECIFICATION

(11) **EP 0 614 934 B1**
(45) Date of publication and mention of the grant of the patent: **28.04.1999**
(21) Application number: 94106889.2
(22) Date of filing: 04.12.1991
(51) Int. Cl.: C08K 5/23, C09B 35/021, G03G 9/09

(54) **Colored resin, colored molded resin member and color filter**
Gefärbtes Harz, geformtes Element aus gefärbtem Harz und Farbfilter
Résine colorée, élément façoné en résine colorée et filtre pour coleurs

(30) Priority: 14.12.1990 JP 410888/90; 28.12.1990 JP 417261/90
(43) Date of publication of application: 14.09.1994
(62) Divisional of application: 91120833.8
(73) Proprietor: ORIENT CHEMICAL INDUSTRIES, LTD., Osaka-shi (JP)
(72) Inventor: Otsuka, Masahiro, c/o Orient Chemical Industries,, Neyagawa-shi, Osaka (JP)
(74) Representative: Liedl, Christine, Dipl.-Chem.

(56) References cited:
- DE-A- 3 220 772
- PATENT ABSTRACTS OF JAPAN vol. 6, no. 174 (C-123)8 September 1982 & JP-A-57 090 041 (DAINICHI SEIKA) 4 June 1982
- PATENT ABSTRACTS OF JAPAN vol. 4, no. 186 (C-36)20 December 1980 & JP-A-55 127 175 (NIPPON SHEET GLASS CO LTD) 1 October 1980
- PATENT ABSTRACTS OF JAPAN vol. 11, no. 69 (C-407)3 March 1987 & JP-A-61 228 044 (DAINIPPON) 11 October 1986
- PATENT ABSTRACTS OF JAPAN vol. 14, no. 558 (P-1141)12 December 1990 & JP-A-02 238 439 (SEIKO EPSON) 20 September 1990
- PATENT ABSTRACTS OF JAPAN vol. 12, no. 225 (E-626)25 June 1988 & JP-A-63 017 565 (MINOLTA CAMERA) 25 January 1988
- DATABASE WPI Week 3188, Derwent Publications Ltd., London, GB; AN 88-217657 [31] & JP-A-63 155 004 (CASIO COMPUTER) 28 June 1988

## Description

The present invention relates to a transparent colored resin, a transparent colored molded resin and a color filter dyed with a red dis-azo dye having the triphenylmethane structure.

To impart colors to thermoplastic resins, thermosetting resins, color filters, etc., various pigments and dyes are used according to respective uses and purposes.

For example, organic pigments are often used for this purpose, since they are excellent in color fastness to light and heat resistance and offer a wide variety of colors and many of brilliant colors.

Oil-soluble dyes and disperse dyes are used to obtain transparent glossy products, since they possess excellent solubility in resin.

With respect to colored resins and colored molded resins, transparency is often demanded as well as color fastness to light, bleeding resistance and resistance against heat during molding or in other situations.

Optical color filters needed for television cameras, liquid crystal televisions, flat panel displays on computers, etc., must be good in spectral property and transparency.

Examples of red dyes for optical filters include those disclosed in Japanese Patent Unexamined Publication No. 278569/1989.

EP-A 0490252 describes a magenta toner powder for developing electrostatic images which comprises a resin and at least one kind of the dis-azo dye represented by the formula [I] according to the present invention.

DE-3220772 Al relates to a photoreceptor for electro-photography. The electro photographic photoreceptor incorporates a disazo pigment suitable for use as a charge generation material for the light-sensitive layer. A disazo pigment having triphenylmethane structure is shown as a photoreceptor, i.e. OPC (organic photoconductor), used for example in photosensitive drums in copying machines.

JP-A-57090041 discloses polybutylene terephthalate compositions colored by an azo dye or pigment.

JP-A-55127175 discloses the preparation of antifogging products colored by an azo type disperse dystuff.

JP-A-61228044 discloses azo pigments as colorant for polyolefin.

JP-A-02238439 discloses a color filter formed by dispersing pigments.

Although color filters are often produced by dyeing a dyable film of gelatin, casein, polyvinyl alcohol or the like on a transparent resin or glass base plate with a dye having a given spectral property by printing, sublimational transfer, etc., it is desirable to color the resin itself from the viewpoint of durability.

Of such conventional coloring agents, organic pigments often fail to satisfy the requirement for transparency because they are almost insoluble in resin. On the other hand, oil-soluble dyes and disperse dyes are prone to discoloration, fading, and bleeding.

Therefore, none of the colored resins, colored molded resin members and color filters which incorporate a conventional coloring agent are said to fully satisfy the essential requirements described above.

It is object of the present invention to provide a colored resin or colored molded resin member which is good in color fastness to light, bleeding resistance, heat resistance and transparency.

It is yet another object of the present invention to provide a color filter which is good in transparency, spectral property, bleeding resistance and durability.

The colored resin of the present invention for accomplishing the objects described above contains at least one kind of the dis-azo dye represented by the following Formula [I], the dis-azo dye being dissolved in the resin : 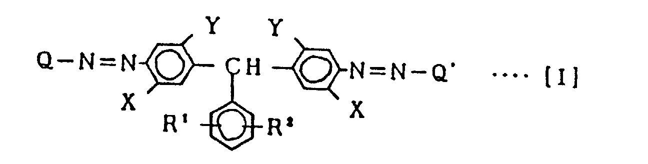 wherein X represents a methyl group, an ethyl group or an alkoxy group having 1 to 4 carbon atoms; Y represents a hydrogen atom or methyl group; R¹ and R² independently represent a hydrogen atom, an alkyl group, alkoxy group or a halogen atom; and Q and Q' represent a naphthol AS residue.

This colored resin is good in color fastness to light, bleeding resistance, heat resistance and transparency.

The colored molded resin of the present invention is obtained by molding the colored resin described above.

The colored molded resin of the present invention may also be obtained by dyeing a molded resin with at least one kind of the dis-azo dye represented by Formula [I].

These colored molded resins are good in color fastness to light, bleeding resistance, heat resistance and transparency.

The color filter of the present invention comprises the colored molded resin described above, which is obtained by molding a colored resin or by dyeing a molded resin with the dis-azo dye.

This color filter is good in transparency, spectral property, bleeding resistance and durability.
- Fig. 1: shows the near ultraviolet-visible light absorption spectrum of Example Dye 1.
- Fig. 2: shows the near ultraviolet-visible light absorption spectrum of Example Dye 3.
- Fig. 3: shows the near ultraviolet-visible light absorption spectrum of Example Dye 9.
- Fig. 4: shows the near ultraviolet-visible light absorption spectrum of Example Dye 10.

The dye represented by Formula [I] for the present invention can be synthesized as follows:

First, an aniline (A) 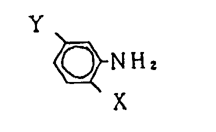 and a benzaldehyde (B) 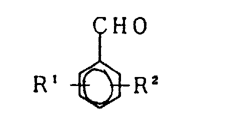 are condensed to a compound (C), 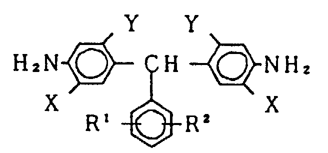 which is then tetrazotized and coupled with a naphthol AS to yield the dye represented by Formula [I].

With respect to the above Formulas (A), (B) and (C), X, Y, R¹ and R² have the same definitions as in Formula [I].

X represents a methyl group, an ethyl group or an alkoxy group having 1 to 4 carbon atoms such as methoxy, ethoxy, propoxy or butoxy; Y represents a hydrogen atom or methyl group; R¹ and R² independently represent a hydrogen atom, an alkyl group such as methyl, ethyl, propyl, iso-propyl, butyl, iso-butyl, sec-butyl, tert-butyl, amyl or iso-amyl, an alkoxy group such as methoxy, ethoxy, propoxy or butoxy or an atom of halogen such as chlorine, bromine or iodine.

With respect to Formula [I], Q and Q' are naphthol AS residues represented by the following Formulas ① through ④, and Q and Q' may be identical or not.

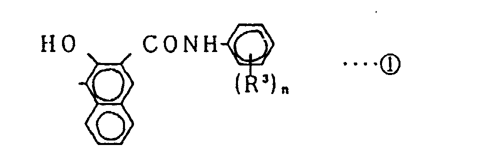

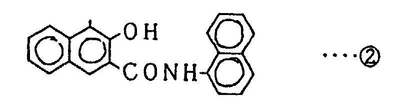

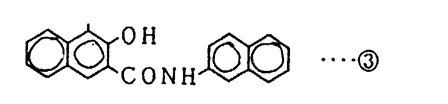

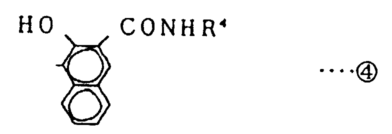

With respect to Formula ①, n represents an integer of 0 to 3; (R³)ₙ represents no substituent or one, two or three substituent(s); each R³ substituent independently represents an alkyl group such as methyl, ethyl, propyl, iso-propyl, butyl, iso-butyl, sec-butyl, tert-butyl, amyl or iso-amyl, an alkoxy group such as methoxy, ethoxy, propoxy or butoxy, an atom of halogen such as chlorine, bromine or iodine or a nitro group.

With respect to Formula ④ , R⁴ represents an alkyl group such as methyl, ethyl propyl, iso-propyl, butyl, iso-butyl, sec-butyl, tert-butyl, amyl or iso-amyl or a hydroxyalkyl group such as hydroxymethyl, α-hydroxyethyl, β-hydroxyethyl, hydroxypropyl, hydroxybutyl or hydroxyamyl.

Naphthol AS compounds are exemplified by the following compounds (a) through (k), all of which are commercially available.
(a) Naphthol AS 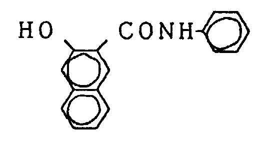
(b) Naphthol AS-D 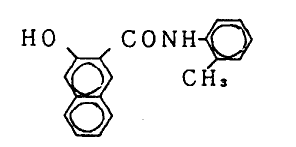
(c) Naphthol AS-RL 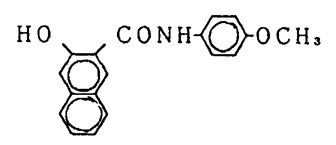
(d) Naphthol AS-OL 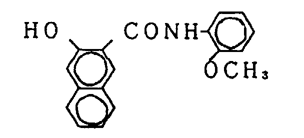
(e) Naphthol AS-PH 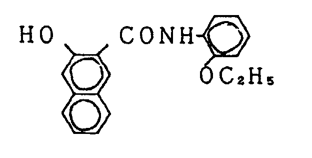
(f) Naphthol AS-E 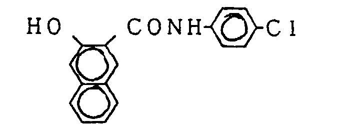
(g) Naphthol AS-TR 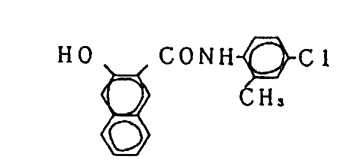
(h) Naphthol AS-BO 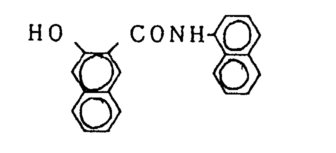
(i) Naphthol AS-SW 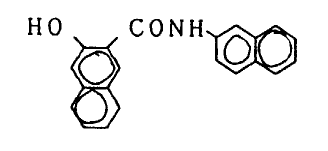
(j) Naphthol AS-BS 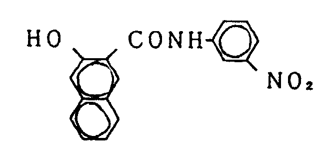
(k) Naphthol BD-1

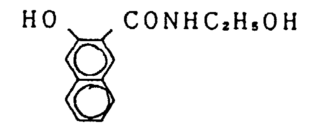

Examples of the dye represented by Formula [I] for the present invention are given in Table 1.

**Table 1**

| Example Dye Number | Aniline component | | Benzaldehyde component | | Coupler ccomponent | | λmax (nm) |
|---|---|---|---|---|---|---|---|
| | X | Y | R¹ | R² | Q | Q' | |
| 1 | CH₃ | CH₃ | H | H | b | b | 522 558 |
| 2 | CH₃ | CH₃ | H | H | c | c | 522 556 |
| 3 | CH₃ | CH₃ | H | H | e | e | 520 554 |
| 4 | CH₃ | CH₃ | H | H | a | a | 522 556 |
| 5 | CH₃ | H | H | H | a | a | 516 548 |
| 6 | OCH₃ | H | H | H | a | a | 530 560 |
| 7 | CH₃ | H | CH₃ (Para) | CH₃ (ortho) | b | b | 520 540 |
| 8 | OCH₃ | H | C₂H₅ (para) | H | c | c | 526 556 |
| 9 | CH₃ | H | i-C₄H₉ (para) | H | h | h | 520 556 |
| 10 | CH₃ | CH₃ | OCH₃ (para) | H | c | c | 522 556 |
| 11 | CH₃ | CH₃ | i-C₄H₉ (para) | H | f | f | 524 558 |
| 12 | CH₃ | H | C₂H₅ (para) | H | g | g | 516 552 |
| 13 | CH₃ | H | H | Cl (ortho) | f | f | 520 552 |
| 14 | CH₃ | CH₃ | H | H | a | b | 522 558 |
| 15 | OCH₃ | H | OCH₃ (para) | H | c | c | 528 560 |
| 16 | CH₃ | CH₃ | H | H | j | j | 526 562 |
| 17 | CH₃ | CH₃ | H | H | k | k | 512 544 |

In Table 1, λ max shows the wavelength of maximum visible light absorption of each example dye determined in chloroform solvent using the 8451A Diode Array Spectrophotometer (trade name, produced by Hewlett-Packard). The near ultraviolet-visible absorption spectra of Example Dyes 1, 3, 9 and 10 determined in the same manner as above are shown in Figures 1, 2, 3 and 4, respectively. In Figures 1 through 4, the abscissa indicates wavelength and the ordinate indicates absorbance.

Examples of resins which constitute the colored resin of the present invention include thermoplastic resins such as styrene resin, acryl resin, styrene-acryl copolymer, polycarbonate, polyamide, polybutylene terephthalate, polyethylene, polypropylene, polyacetal and polyester and thermosetting resins such as polyurethane and phenol resin. Particularly, when using the dye represented by Formula [I] in combination with styrene resin, acryl resin, styrene-acryl copolymer or polycarbonate, a colored resin with excellent transparency can be obtained.

The colored resin of the present invention can, for example, be produced by melt-mixing the dis-azo dye represented by Formula [I] in resin. When using the colored resin of the present invention for plastic molding, the dis-azo dye of Formula [I] is compounded in the resin normally at 0.1 to 2% by weight.

Molding of the colored resin of the present invention can be achieved by a known means such as injection molding.

The colored molded resin member of the present invention can, for example, be obtained by dyeing a molded product comprising the same resin as used in the colored resin described above with the dis-azo dye represented by Formula [I] by transfer, printing, sublimation deposition and other means.

The color filter of the present invention can, for example, be produced by the method described in Japanese Patent Unexamined Publication No. 278569/1989 or another method in accordance therewith. Specifically, such methods include the method in which a dye is mixed and kneaded with resin and solvent to yield an ink, which is then used to dye a dyeable plastic base plate of polyester, polyamide, acryl resin or the like, the method in which such an ink is used to form a colored resin film on a transparent base plate of resin or another material, the method in which a dye is kneaded in resin and the resin is molded to a sheet form, the method in which a syntethic resin film is dyed in a solvent such as ethylene glycol, and the method in which an ink composition is coated on paper etc. and transferred onto a resin base plate to dye.

In the colored resin, colored molded resin and color filter of the present invention, one or more other coloring agents can be used in combination, as long as the purpose or effect of the invention are not interfered with.

### Examples

The present invention is hereinafter described in more detail by means of the following examples, but these are not to be construed as limitative on the present invention. In the description below, "part(s) by weight" are referred to as "part(s)" for short.

Examples of synthesis of dis-azo dye for the present invention.

### Synthesis of 4,4'-benzylidene-di-2,5-xylidine

A mixture of 121 (1 mol) of 2,5-xylidine, 53 g (0,5 mol) of benzaldehyde, 70 g of concentrated hydrochloric acid and 150 g of chlorobenzene was reacted while refluxing for 7 hours.

After being alkalized in an aqueous solution of caustic soda, the reaction mixture was subjected to steam distillation, followed by residue filtration. The solid separated by filtration was washed with water and dried to yield 130 g of an unpurified base compound.

This compound was purified with an about 3-fold amount of alcohol to yield a white powder represented by the following structural Formula. Its melting point was 203 to 205°C.

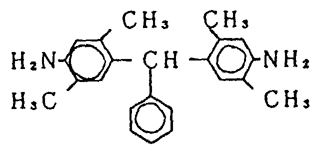

### Synthesis of Example Dye 1

8.3 g of 4,4'-benzylidene-di-2,5-xylidine was dissolved and dispersed in 80 g of water containing 12 g of concentrated hydrochloric acid. After cooling the solution to under 5 °C, a solution of 7 g of sodium nitrite in a small amount of water was dropwise added thereto for tetrazotization.

Separately, 13.6 g of naphthol AS-D were dissolved in 200 g of water containing 4.5 g of caustic soda. To this solution, 1 g of a nonionic dispersing agent was added, followed by addition of ice to cool the mixture to under 5 °C to yield a coupler solution.

To this coupler solution, the tetrazonium salt solution prepared above was dropwise added for coupling. The resulting crystals were separated by filtration, washed with water and dried to yield 22.5 g of a red powder of dye (Example Dye 1).

### Synthesis of Example Dye 11

9,7 g of 4,4'-(p-isobutylbenzylidene)-di-2,5-xylidine were dissolved in 100 g of acetic acid. To this solution, 10 g of concentrated hydrochloric acid were added. After cooling the solution to under 5 °C, a solution of 3.5 g of sodium nitrite in a small amount of water was dropwise added thereto for tetrazotization.

14.9 g of naphthol AS-E were dissolved in 100 g of DMF. To this solution, 2 g of a nonionic surfactant were added, followed by cooling to under 10 °C to yield a coupler solution.

While keeping the coupler solution alkaline by dropwise addition of a dilute aqueous solution of caustic soda, the tetrazonium salt solution prepared above was dropwise added thereto for coupling.

The resulting crystals were separated by filtration, washed with water and dried to yield 25 g of a red powder of dye (Example Dye 11).

### Examples of preparation of polymeric composition

### Preparation of Polymeric Composition 1

140 parts of styrene, 60 parts of n-butyl methacrylate, 50 parts of hydroxyethyl methacrylate, 30 parts of Example Dye 1 and 300 parts of toluene were placed in a three-necked flask equipped with a reflex condenser, and 2 parts of azoisobutyronitrile were added, followed by polymerization at 85 to 100 °C for 10 hours. After completion of the reaction, the unreacted monomer and toluene were removed to yield Polymeric Composition 1.

### Preparation of Polymeric Composition 2

100 parts of styrene, 100 parts of n-butyl methacrylate, 50 parts of hydroxyethyl methacrylate, 50 parts of Example Dye 2 and 300 parts of toluene were placed in a three-necked flask equipped with a reflux condenser, and 5 parts of azoisobutyronitrile were added, followed by polymerization at 75 to 90 °C for 10 hours. After completion of the reaction, the unreacted monomer and toluene were removed to yield Polymeric Composition 2.

### Preparation of Polymeric Compositions 3 through 17.

Polymeric Compositions 3 through 17 were prepared in the same manner as in the above Examples, except that the dyes were replaced with Example Dyes 3 through 17 listed in Table 1 and the type and amount of polymerization initiator were varied as appropriate.

### Example 1

500 g of polystyrene resin [Dialex (trade name), produced by Mitsubishi Monsanto Chemical Co.] and 0.25 g of Example Dye 1 as a coloring agent were placed in a stainless steel tumbler and mixed thoroughly for 1 hour. This mixture was kneaded in a molten state at 200 °C using a vent-type extruder (trade name: E30SV, produced by Enpla Sangyo Co.) and pelletized by a standard method to yield colored pellets.

These pellets were then dried at 80 °C for 3 hours and subsequently subjected to an ordinary method of injection molding at a molding temperature of about 200 °C using an injection molding machine (trade name: K-25C, produced by Kawaguchi Tekko Co.) to prepare a test plate. Example Dye 1 well endured the heat during kneading in a molten state and molding, giving a red molded plate with excellent transparency.

The color fastness to light of this molded plate was found to be of grade 6, and its bleeding resistance was of grade 5, each of which were good.

The color fastness to light was determined by applying the test plate to a fade-Ometer (carbon arc type) for 40 hours and then comparing its status with the normal status using a blue scale (Japanese Industrial Standard JIS L0841). The higher the grade number is, the better the color fastness to light is. The same applies in the following Examples and Comparative Examples.

Bleeding resistance was determined by leaving the test plate at 120 °C for 24 hours while keeping the test plate under a load of 1.96 N/cm² (200 g/cm²) between two uncolored molded plates of the same material as the test plate, and then evaluating the degree of staining onto the uncolored molded plates using a grey scale (Japanese Industrial Standard JIS L0805). The higher the grade number is, the better the bleeding resistance is. The same applies in the following Examples and Comparative Examples.

### Example 2

500 g of methacryl resin [Acrypet (trade name), produced by Mitsubishi Rayon Co., Ltd.] and 0.25 of Example Dye 9 as a coloring agent were mixed in a molten state at 210 °C and pelletized by a standard method to yield colored pellets.

Then, these pellets were treated in the same manner as in Example 1 to yield a red transparent molded plate.

This molded plate was found to be good in color fastness to light at grade 6 and bleeding resistance at grade 5.

### Comparative Example 1

To compare color fastness to light, bleeding resistance and light transmittance, a molded plate was prepared in the same manner as in Example 1 except that Example Dye 1 used in Example 1 was replace with C. I. Pigment Red 61.

This molded plate was found to be of good in color fastness to light and bleeding resistance, but compatibility with resin was poor and the light transmittance was very low.

### Example 3

Example Dye 1, acryl resin and toluene were mixed and kneaded to yield a gravure printing ink.

Using this ink, printing was performed on a polycarbonate base plate by gravure printing, and the ink film was dried to form a colored resin film to yield a red optical filter.

This filter was found to be good in color fastness to light at grade 6 and bleeding resistance at grade 5. Its spectral property was also good.

### Example 4

On a molded plate of methacrylate resin [Acrypet (trade name), produced by Mitsubishi Rayon Co., Ltd.], a sheet of transfer paper, prepared from 2 g of Example Dye 3, 10 g of Pyronal MD1200 [(trade name), produced by Toyobo Corporation] and 1 g of silica gel, was placed, followed by calendering at 200 °C to yield a red filter as a result of dyeing the molded plate.

This filter was found to be good in color fastness to light at grade 6 and bleeding resistance at grade 5. Its spectral property was as good as in Example 3.

### Example 5

5 g of polyester film and 2 g of Example Dye 10 were added to 1000 g of ethylene glycol, and the polyester film was dyed at 120 °C for 90 minutes to yield a red filter. This filter was found to be good in color fastness to light at grade 6 and bleeding resistance at grade 5. Its spectral property was as good as in Example 3.

### Comparative Example 2

To compare color fastness to light and bleeding resistance, a red filter was prepared in the same manner as in Example 3 except that Example Dye 1 used in Example 3 was replaced with C. I. Solvent Red 54.

The color fastness to light of this red filter was found to be of grade 5 and its bleeding resistance was of grade 4 to 5.

## Claims

1. A transparent colored resin containing at least one kind of the dis-azo dye represented by the following formula [I], the dis-azo dye being dissolved in the resin: 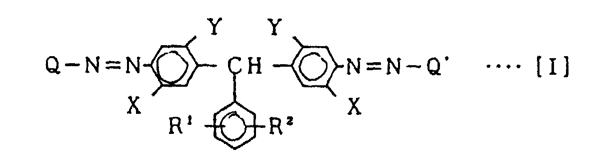 wherein X represents a methyl group, an ethyl group or alkoxy group having 1 to 4 carbon atoms; Y represents hydrogen atom or methyl group; R¹ and R² independently represent a hydrogen atom, an alkyl group, alkoxy group or a halogen atom; Q and Q' represent a naphthol AS residue.

2. A transparent colored resin of claim 1 wherein the resin is selected from the group consisting of styrene resin, acryl resin, styrene-acryl copolymer and polycarbonate.

3. A transparent colored molded resin obtained by molding the colored resin of claim 1 or 2.

4. A transparent colored molded resin obtained by dyeing a molded resin with at least one kind of the dis-azo dye represented by the following formula [I]: 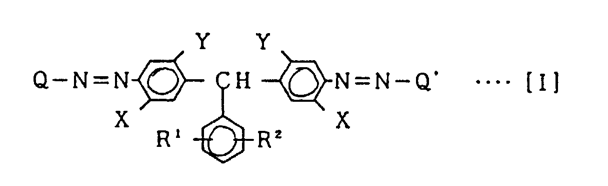 wherein X represents a methyl group, an ethyl group or alkoxy group having 1 to 4 carbon atoms; Y represents hydrogen atom or methyl group; R¹ and R² independently represent a hydrogen atom, an alkyl group, alkoxy group or a halogen atom; Q and Q' represent a naphthol AS residue.

5. A transparent colored molded resin of claim 4 wherein the resin is selected from the group consisting of styrene resin, acryl resin, styrene-acryl copolymer and polycarbonate.

6. A color filter comprising the transparent colored molded resin of claim 3.

7. A color filter comprising the transparent colored molded resin of claim 4 or 5.

## Patentansprüche

1. Transparentes gefärbtes Harz, enthaltend mindestens eine Art des Disazofarbstoffs, dargestellt durch die folgende Formel [I], wobei der Disazofarbstoff in dem Harz gelöst ist: 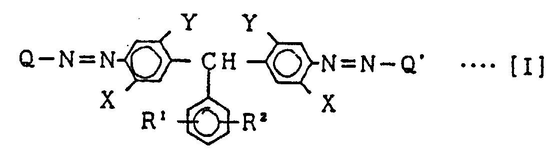 wobei X eine Methylgruppe, eine Ethylgruppe oder Alkoxygruppe mit 1 bis 4 Kohlenstoffatomen darstellt; Y ein Wasserstoffatom oder eine Methlygruppe darstellt; R¹ und R² unabhängig voneinander ein Wasserstoffatom, eine Alkylgruppe, Alkoxygruppe oder ein Halogenatom darstellt; Q und Q' einen Naphthol-AS-Rest darstellen.

2. Transparentes geformtes Element aus gefärbtem Harz nach Anspruch 1, wobei das Harz ausgewählt ist aus der Gruppe, bestehend aus Styrolharz, Acrylharz, Styrol-Acrylcopolymer und Polycarbonat.

3. Transparentes geformtes Element aus gefärbtem Harz, erhalten durch Formen des gefärbtes Harzes nach Anspruch 1 oder 2.

4. Transparentes geformtes Element aus gefärbtem Harz, erhalten durch Färben eines geformten Harzelements mit mindestens einer Art des Disazofarbstoffs, dargestellt durch die folgende Formel [I]: 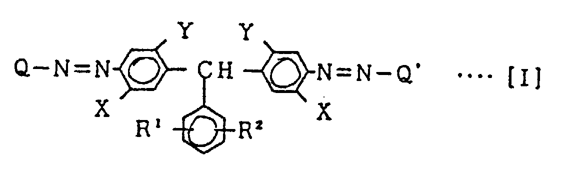 wobei X eine Methylgruppe, eine Ethylgruppe oder Alkoxygruppe mit 1 bis 4 Kohlenstoffatomen darstellt; Y ein Wasserstoffatom oder eine Methylgruppe darstellt; R¹ und R² unabhängig voneinander ein Wasserstoffatom, eine Alkylgruppe, Alkoxygruppe oder ein Halogenatom darstellt; Q und Q' einen Naphthol-AS-Rest darstellen.

5. Transparentes geformtes Element aus gefärbtem Harz nach Anspruch 4, wobei das Harz ausgewählt ist aus der Gruppe, bestehend aus Styrolharz, Acrylharz, Styrol-Acrylcopolymer und Polycarbonat.

6. Farbfilter, enthaltend das transparente geformte Element aus gefärbtem Harz nach Anspruch 3.

7. Farbfilter, enthaltend das transparente geformte Element aus gefärbtem Harz nach Anspruch 4 oder 5.

## Revendications

1. Résine colorée transparente contenant au moins un type de colorant disazoique représenté par la formule suivante [i), le colorant disazoïque étant dissous dans la résine : 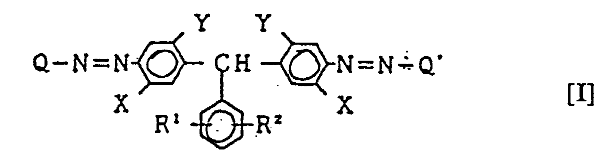 dans laquelle X représente un groupe méthyle, éthyle ou alcoxy comportant de 1 à 4 atomes de carbone, Y représente un atome d'hydrogène ou un groupe méthyle, R¹ et R² représentent chacun, indépendamment, un atome d'hydrogène ou d'halogène ou un groupe alkyle ou alcoxy, et Q et Q' représentent chacun un résidu de naphtol AS.

2. Résine colorée transparente selon la revendication 1, dans laquelle la résine est choisie dans l'ensemble constitué par une résine de styrène, une résine acrylique, un copolymère acrylique de styrène et un polycarbonate.

3. Résine colorée transparente moulée, obtenue par moulage de la résine colorée selon la revendication 1 ou 2.

4. Résine colorée transparente moulée, obtenue par teinture d'une résine moulée avec au moins un type de colorant disazoïque représenté par la formule suivante [I] : 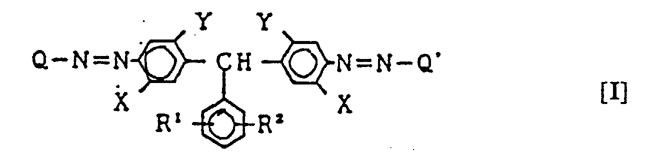 dans laquelle X représente un groupe méthyle, éthyle ou alcoxy comportant de 1 à 4 atomes de carbone, Y représente un atome d'hydrogène ou un groupe méthyle, R¹ et R² représentent chacun, indépendamment, un atome d'hydrogène ou d'halogène ou un groupe alkyle ou alcoxy, et Q et Q' représentent chacun un résidu de naphtol AS.

5. Résine colorée transparente moulée selon la revendication 4, dans laquelle la résine est choisie dans l'ensemble constitué par une résine de styrène, une résine acrylique, un copolymère acrylique de styrène et un polycarbonate.

6. Filtre coloré comprenant la résine colorée transparente moulée selon la revendication 3.

7. Filtre coloré comprenant la résine colorée transparente moulée selon la revendication 4 ou 5.
